# EUROPEAN PATENT SPECIFICATION

(11) **EP 2 802 135 B1**
(45) Date of publication and mention of the grant of the patent: **21.06.2017**
(21) Application number: 13166657.0
(22) Date of filing: 06.05.2013
(51) Int. Cl.: H04M 19/00, H04M 3/00

(54) **DC/DC Converter and Subscriber Line Interface Circuit**
Gleichstromwandler und Schnittstellenschaltung einer Teilnehmerleitung
Convertisseur CC/CC et circuit d'interface de ligne d'abonné

(43) Date of publication of application: 12.11.2014
(73) Proprietor: Lantiq Deutschland GmbH, 85579 Neubiberg (DE)
(72) Inventor: Noessing, Gerhard, 9500 Villach (AT)
(74) Representative: Sticht, Andreas

(56) References cited:
- CN-C- 100 512 327
- US-A1- 2009 092 243
- US-A1- 2009 245 504
- MOONS E ET AL: "UNIVERSAL HIGH VOLTAGE SUBSCRIBER LINE INTERFACE CIRCUIT IN A COMBINED CMOS-DMOS-BIPOLAR TECHNOLOGY", ELECTRICAL COMMUNICATION, ALCATEL. BRUSSELS, BE, vol. 65, no. 2, 1 January 1992 (1992-01-01), pages 112-118, XP000291595, ISSN: 0013-4252

## Description

### TECHNICAL FIELD

The present invention relates to a subscriber line interface circuit (SLIC) and a DC/DC converter for use in an SLIC.

### BACKGROUND

Subscriber line interface circuits are typically used in telephone exchanges (telephone switches) of telecommunications networks. A subscriber line interface circuit (SLIC) provides a communication interface between a network operator's digital communication network and an analog subscriber line. The analog subscriber line connects to a subscriber station (e.g., a modem or a telephone, generally referred to as "subscriber equipment") at a location remote from the exchange. SLICs are also used in cable modems and digital subscriber line (DSL) modems (or any other type of modem) where voice signals are received, e.g., via voice over internet protocol (VoIP) and then converted into an analog voice signal compatible with analog subscriber terminal equipment, particularly POTS terminal equipment (POTS = plain old telephone system). In this case the modem acts as a small "telephone exchange" remote from the central office. Today standard modems (e.g. cable modems), which are located in the subscriber's premises, include two interfaces for connecting analog telephones.

The analog subscriber line and subscriber equipment form a subscriber loop. The SLIC usually needs to provide relatively high voltages and currents for control signaling with respect to the subscriber equipment on the subscriber loop. For bi-directional communication, the SLIC transforms digital data received from the digital network into low voltage analog signals for transmission on the subscriber loop to the subscriber equipment and vice versa. Generally, an SLIC usually uses different power supply levels depending on the operational state of the subscriber equipment.

A first supply level is used when the subscriber equipment is "on hook" (standby mode) and a different, second supply level is used when the subscriber equipment is "off hook" (active mode). Two-channel or multi-channel SLICs provide the same functionality for each channel. The channels operate independently but may share one power supply.

SLICs previously employed power supply circuits with linear voltage (or current) regulators to provide the different voltage (or current) levels, which is comparably inefficient in terms of power loss within the power supply circuit.

To address this, various techniques are known. For example, US 2009/0245504 A1 discloses two cascaded switchers to provide an appropriate voltage to each SLIC.

US 2009/0092243 A1 discloses two SLICs for two interface circuits. Over-voltage and over-current protection is implemented.

CN 100 512 327 C discloses a power-supply circuit for providing different voltages.

E. Moons et al., "Univeral High Voltage SLIC in a combined CMOS-DMOS-Bipolar technology" discloses a SLIC having low power dissipation.

More recent SLIC architectures use switching power converters (also known as switching-mode power supplies, or SMPS) to generate the appropriate supply voltage levels from a fixed DC input voltage. Although switching power converters are generally significantly more efficient as they allow for significantly less power loss, there is still a need for improvement to further reduce the power loss, particularly in the supply circuits of two-channel or multi-channel SLICs.

### SUMMARY

A subscriber line interface circuit (SLIC) according to claim 1 is herein described. Furthermore, a method for supplying power to a first and a second subscriber terminal according to claim 10 is herein described.

### BRIEF DESCRIPTION OF THE DRAWINGS

The invention can be better understood with reference to the following drawings and descriptions. The components in the figures are not necessarily to scale; emphasis is instead placed upon illustrating the principles of the invention. Moreover, in the figures, like reference numerals designate corresponding parts. In the drawings:
- Figure 1: is a block diagram illustrating an SLIC in a telephone exchange connected to a subscriber terminal located on the subscriber's premises;
- Figure 2: is a block diagram illustrating one exemplary implementation of an SLIC in accordance with one example of the present invention;
- Figure 3: is a circuit diagram illustrating a conventional switching power converter circuit suitable for use in an SLIC;
- Figure 4: is a circuit diagram illustrating an improved switching power converter circuit for use in a two-channel SLIC in accordance with one example of the present invention; and
- Figure 5: is a timing diagram illustrating the output voltages generated by the switching power converter circuit of Fig. 3.

### DETAILED DESCRIPTION

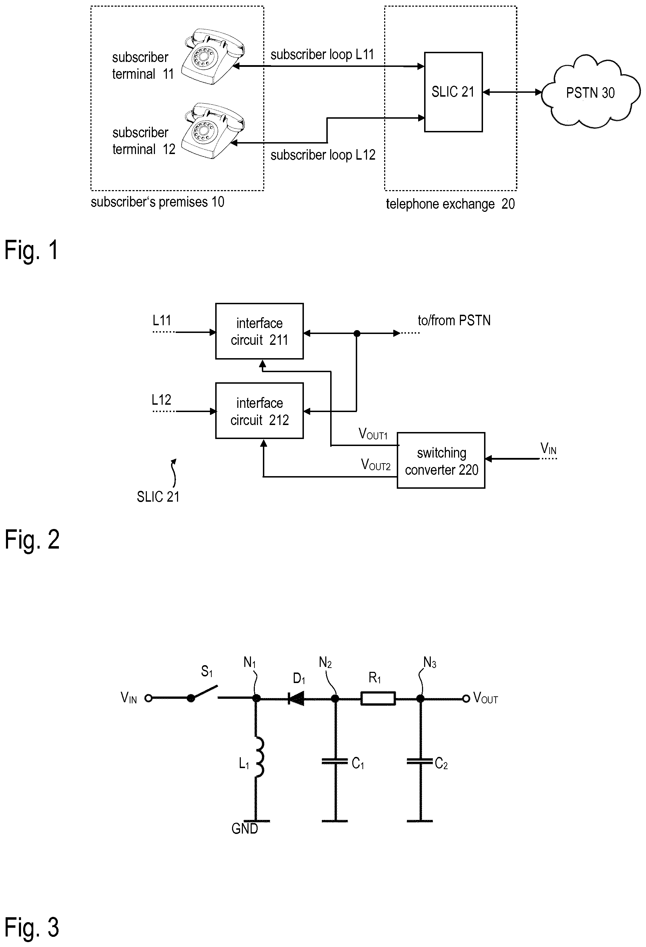

Figure 1 illustrates the conventional use of a subscriber line interface circuit (SLIC). SLIC 21 is, for example, located in telephone exchange (telephone switch) 20, which may be located within a service provider's central office or a subscriber loop carrier (SLC). Generally, SLIC 21 provides an interface between subscriber terminals 11 and 12 (e.g., telephones), which are located on subscriber's premises 10, and the service provider's (usually digital) telecommunications network, which may be part of public switched telephone network (PSTN) 30. In the present example, SLIC 21 includes two separate channels for interfacing with the two separate subscriber terminals 11 and 12. The lines connecting subscriber terminals 11 and 12 with SLIC 21 are usually referred to as "subscriber loops" or "subscriber lines" and are labeled L11 and L12 in Fig. 1. Subscriber loops L11 and L12 are usually implemented using twisted pair copper lines. Furthermore, SLIC 21 includes an interface for connecting to a digital telecommunications network, which is represented by PSTN 30 in Fig. 1.

Basically, subscriber terminals 11 and 12 may operate in two different modes, i.e., standby mode ("on-hook") and active mode ("off-hook"). SLIC 21 usually provides a relatively high DC voltage of, e.g., 42 to 48 volts to a connected subscriber terminal if this subscriber terminal is in standby mode. However, the subscriber terminals do not consume a significant supply current in standby mode. If the connected subscriber terminal is in active mode, SLIC 21 provides a constant current of about 25 milliamperes, wherein the subscriber terminal has an "off-hook" resistance of approximately 300 ohms. SLIC 21 thus provides a relatively low DC voltage of about 7.5 volts to a subscriber terminal in active mode. The mentioned current, voltage and resistance values have to be regarded as examples. The actual values are, however, usually defined by service providers, regulating authorities or legislators and may be different in different countries.

Figure 2 illustrates the SLIC of Fig. 1 in more detail. In the present example, SLIC 21 includes the two interface circuits 211 and 212 for interfacing to the corresponding subscriber loops L11 and L12, respectively. Interface circuits 211 and 212 are both configured to receive signals from the connected subscriber terminals 11 and 12, respectively, to convert the signals in accordance with the used transmission standard and to transmit the converted signals to telecommunications network 30. Analogously, interface circuits 211 and 212 are both configured to receive signals from telecommunications network 30 to convert the signals appropriately to be transmitted to the desired subscriber terminal via the corresponding subscriber loop. In such a manner, a bi-directional transmission is accomplished. To provide the voltage and current levels mentioned above, interface circuits 211 and 212 are supplied using switching power converter 220. It should be noted that Fig. 2 is not a complete illustration of an SLIC. Components that are known as such and that are not relevant for the present discussion have been omitted for the sake of conciseness.

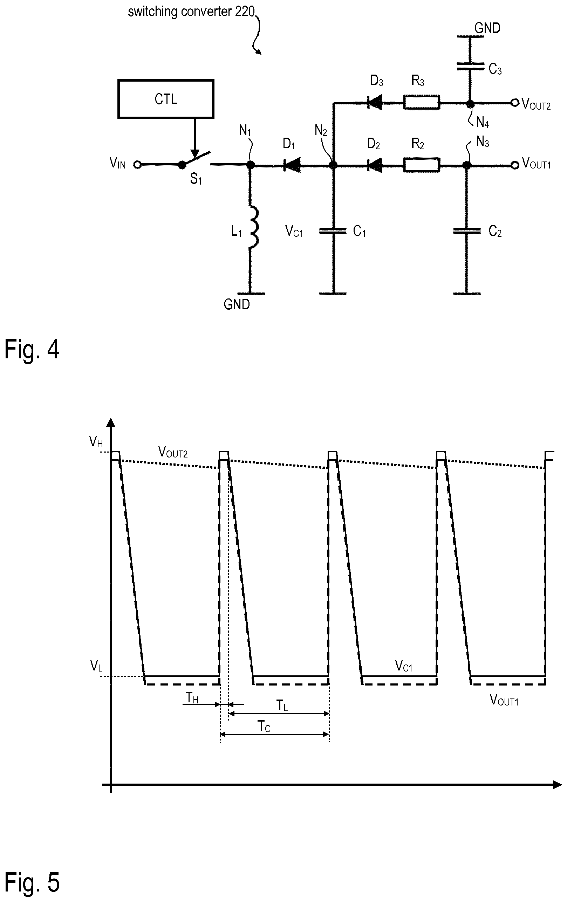

Switching power converter 220 may be a DC/DC converter that is supplied with input voltage V_{IN} and configured to generate first and second output voltage signals V_{OUT1} and V_{OUT2}. These output voltage signals V_{OUT1} and V_{OUT2} are supplied to interface circuits 211 and 212, respectively. The function and operation of switching power converter 220 will be described later with respect to Figs. 4 and 5.

Fig. 3 illustrates the basic setup of a single-output switching power converter conventionally used in SLICs. When using single-output switching power converters in a two-channel (or multi-channel) SLIC, either one separate switching power converter has to be provided for each channel or, alternatively, the same output voltage signal V_{OUT} has to be provided to both channels. Both options have undesired consequences. Providing two separate switching power converters is a rather expensive solution, whereas using the same output voltage V_{OUT} for both channels (i.e., for both interface circuits 211 and 212) entails extensive power loss, particularly when the subscriber terminal connected to the first channel is in active mode and the subscriber terminal connected to the second channel is in standby mode. In this case, the switching power converter would have to provide the high voltage level (e.g., 42 volts) for the channel connected to the subscriber terminal in standby mode and simultaneously provide the required current (e.g., 25 mA) for the channel connected to the subscriber terminal in active mode. Power loss higher than 2 watts may thus occur when only one of the two subscriber terminals is in active mode. In order to reduce power loss while simultaneously keeping costs low (by minimizing the number of expensive circuit components), the exemplary multi-output switching power converter 220 of Fig. 4 is used in an SLIC, as discussed above with reference to Fig. 2. Before discussing Fig. 4, the basic switching converter of Fig. 3 is briefly explained.

Input voltage V_{IN} is applied across a series circuit of semiconductor switch S₁ and inductor L₁. The series circuit is connected between an input circuit node (at which input voltage V_{IN} is provided) and a reference potential, e.g., ground potential. The common circuit node N₁ of this series circuit (i.e., the middle tap between semiconductor switch S₁ and inductor L₁) is connected to the cathode of diode D₁. The cathode of diode D₁ is connected to circuit node N₂, which is coupled to the reference potential, e.g., ground potential, via a first capacitor C₁. In essence, the output voltage could be tapped at circuit node N₂. However, an RC low-pass is used to reduce the output voltage ripple. That is, the output voltage is provided at circuit node N₃, which is connected to circuit node N₂ via resistor R₁ and to the reference potential via the second capacitor C₂. It can be seen that resistor R₁ and the second capacitor C₂ form an RC low-pass. Output voltage V_{OUT} depends on input voltage V_{IN} and the switching operation of semiconductor switch S₁, which is usually controlled by a controller circuit; this is known as such and thus omitted in the present illustration of Fig. 3. Inductor L₁, semiconductor switch S₁, and diode D₁, which has to be a fast recovery diode, are the most cost-intensive circuit components. The first capacitor C₁ should be a ceramic capacitor, whereas the second capacitor may be an electrolytic capacitor.

The multi-output switching converter 220 of Fig. 4 includes a (e.g., single-output) switching power converter circuit that provides one intermediate voltage signal V_{C1} and two output branches for distributing the voltage level of V_{C1} to the outputs of the multi-output switching converter 220. In the present example, the multi-output switching converter has two outputs providing first and second output voltage signals V_{OUT1} and V_{OUT2}, respectively. However, further output branches could be provided dependent on the actual application. These output voltage signals V_{OUT1} and V_{OUT2} depend on the intermediate voltage V_{C1}. The switching power converter circuit, which provides the intermediate voltage signal V_{C1}, includes semiconductor switch S₁, inductor L₁ and the first capacitor C₁, and is set up analogously to the previous example of Fig. 3. Accordingly, input voltage V_{IN} is applied across a series circuit of semiconductor switch S₁ and inductor L₁. The series circuit is connected between an input circuit node (at which input voltage V_{IN} is provided) and a reference potential, e.g., ground potential GND. The common circuit node N₁ of this series circuit (i.e., the middle tap between semiconductor switch S₁ and inductor L₁) is connected to the cathode of diode D₁. The cathode of diode D₁ is connected to circuit node N₂, which is coupled to the reference potential, e.g., ground potential, via a first capacitor C₁. The voltage signal across capacitor C₁ is the intermediate voltage signal V_{C1} mentioned above. Therefore, circuit node N₂ could be regarded as the output of a single-output switching power converter that provides, as an output signal, the intermediate voltage signal V_{C1}. The intermediate voltage signal V_{C1} depends on the input voltage and the switching operation of semiconductor switch S₁, which is controlled by control circuit CTL.

Different from the previous example, circuit node N₂ is connected to two separate output branches. The first output branch includes diode D₂, resistor R₂ and a first output capacitor C₂, and the second output branch includes another diode D₃, another resistor R₃ and a second output capacitor C₃. It should be noted that the diodes D2 and D3 can be generally regarded as semiconductor switches which are configured to prevent a discharging of the output capacitors C₂ and C₃, respectively, via the circuit node N₂. The diodes D₂ or D₃ could be replaced by, e.g., by appropriately driven semiconductor switches. The output circuit nodes of the output branches, at which output voltage signals V_{OUT1} and V_{OUT2} are provided, are denoted as circuit nodes N₃ and N₄, respectively. Accordingly, circuit node N₂ (at which the intermediate voltage signal V_{C1} is provided) is connected to the first output node N₃ (at which the first output voltage V_{OUT1} is provided) via a series circuit of diode D₂ and resistor R₂. Additionally, circuit node N₂ is also connected to the second output node N₄ (at which the second output voltage V_{OUT2} is provided) via a series circuit of diode D₃ and resistor R₃. Both output nodes N₃ and N₄ are connected to reference potential via the output capacitors C₂ and C₃, respectively. Similar to the previous example, resistor R₂ and capacitor C₂ form a first RC low-pass, while resistor R₃ and capacitor C₃ form a second RC low-pass. Diodes D₂ and D₃ prevent an undesired discharging of capacitor C₁ when output voltages V_{OUT1} and V_{OUT2} are lower than voltage V_{C1} at circuit node N₂. Output voltages V_{OUT1} and V_{OUT2} depend on input voltage V_{IN} and the switching operation of semiconductor switch S₁, which is controlled by control circuit CTL.

Control circuit CTL generates an appropriate drive signal for semiconductor switch S₁, which may be of any type such as an MOS transistor or a bipolar junction transistor. For control purposes, the control circuit may receive a feedback signal representing voltage V_{C1} or either of the output voltages V_{OUT1} or V_{OUT2}. The operation of the switching power converter is illustrated using the timing diagram of Fig. 5. According to the example of Fig. 5, the control circuit is configured to drive semiconductor switch S₁ cyclically on and off such that the intermediate voltage signal V_{C1} is at a first level V_{H} (e.g., 42 volts) for a relatively short first time interval T_{H} (e.g., T_{H}=1 ms) and then at a second lower level V_{L} (e.g. 7.5 volts) for a relatively long second time interval T_{L} (e.g., T_{L}=9 ms). In the present example, the first voltage level V_{H} is generated regularly following a cycle time of T_{C}=T_{H}+T_{L}. However, the first voltage level is not necessarily repeated at a fixed frequency. One exemplary waveform of the generated voltage V_{C1} is illustrated in Fig. 5. It should be noted that the intermediate voltage V_{C1} and output voltages V_{OUT1} and V_{OUT2} may also be negative. It should also be noted that, when referring to a "high voltage level" or a "low voltage level", it is the magnitude (absolute value) of the voltage level that is referred to. A voltage level of -40 volts is thus considered a high voltage level as compared to a low voltage level of -7.5 volts.

For further discussion, it is assumed that output voltage V_{OUT1} is supplied to interface circuit 211 connected to subscriber terminal 11 that is in active mode, whereas output voltage V_{OUT2} is supplied to interface circuit 212 connected to subscriber terminal 12 that is in standby mode. Accordingly, approximately zero current is provided to subscriber loop L12 (standby), whereas a desired load current (e.g., 25 mA) is provided to subscriber loop L11 (active). During time interval T_{H}, capacitor C₁ and output capacitors C₂ and C₃ are charged to approximately the same voltage V_{H} (when neglecting the voltage drop across diodes D₂ and D₃). Therefore, output voltages V_{OUT1} and V_{OUT2} are at the desired high level V_{H} during time interval T_{H}. During time interval T_{L}, the intermediate voltage signal V_{C1} drops to the low level V_{L}. Nevertheless, output voltage V_{OUT2} remains at a relatively high level and drops only slightly during the subsequent time interval T_{L} as the connected subscriber terminal 12 is in standby mode and sinks only a very low quiescent current. Simultaneously, subscriber terminal 12, which is in active mode, sinks the desired current (e.g., 25 mA); capacitor C₂ thus discharges relatively quickly and, as a result, the corresponding output voltage drops to (approximately) the low level V_{L}. The corresponding waveforms of output voltages V_{OUT1} and V_{OUT2} are also depicted in Fig. 5.

Employing the switching scheme illustrated in Fig. 5 allows a significant reduction of power loss when only one of the two channels of SLIC 21 (see Fig. 2) is active while the other is in standby mode. The loss has been measured in a test setup and could be reduced from over 2 watts (one output voltage V_{OUT} for both channels) to below 0.5 watts (multi-output switching converter of Fig. 4). Finally, it should be noted that the examples discussed above refer to a switching converter using an inverting buck-boost converter topology. However, other converter topologies (e.g. flyback converter, inverting boost converter, etc.) may be applied dependent on the requirements of the intended application.

Although various exemplary embodiments of the invention have been disclosed, it will be apparent to those skilled in the art that various changes and modifications can be made that will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those where not explicitly been mentioned. Furthermore, the methods of the invention may be achieved in either all software implementations using the appropriate processor instructions or in hybrid implementations that utilize a combination of hardware logic and software logic to achieve the same results. Such modifications to the inventive concept are intended to be covered by the appended claims.

## Claims

1. A subscriber line interface circuit comprising:
a first interface circuit (211) operably coupled to a first subscriber loop (L11);
a second interface circuit (212) operably coupled to a second subscriber loop (L12);
a power supply circuit (220) coupled to the first and the second interface circuit to provide a first and a second output voltage to the first and second interface circuit, respectively; the power supply circuit comprises:
a switching power converter operably supplied with an input voltage and configured to provide an intermediate voltage signal at an intermediate circuit node (N2);
at least a first and a second output branch, each output branch comprising an output capacitor (C2, C3) that is coupled to the intermediate circuit node and that provides an output voltage signal that is dependent on the intermediate voltage signal,
wherein the first output branch is configured to provide the output voltage signal to the first interface circuit,
wherein the second output branch is configured to provide the output voltage signal to the second interface circuit,
wherein the switching power converter is configured to set the signal level of the intermediate voltage signal repeatedly to a high voltage level for a first time interval and to a low voltage level when the first time interval has elapsed,
wherein each output branch comprises a diode (D2, D3) that couples the intermediate circuit node (N3, N4) with an output circuit node of the output branch,
wherein each output branch comprises a resistor (R2, R3), the resistor and the output capacitor of each output branch forming an RC low-pass.

2. The subscriber line interface circuit of claim 1, wherein each output branch comprises an inductor, the inductor and the output capacitor of each output branch forming an LC low-pass.

3. The subscriber line interface circuit of claim 1, wherein each output branch comprises a diode and an inductor, which are coupled in series, the inductor and the output capacitor of each output branch forming an LC low-pass, and the diode connecting the intermediate circuit node and the LC low-pass.

4. The subscriber line interface circuit of claim 3, wherein, in each output branch, the diode is arranged such that discharging of the output capacitor via the intermediate circuit node is prevented by the diode.

5. The subscriber line interface circuit of claim 1, wherein the switching power converter is configured to set the signal level of the intermediate voltage signal cyclically and with a cycle time to a high voltage level for a first time interval and to a low voltage level when the first time interval has elapsed.

6. The subscriber line interface circuit of claim 5, wherein the ratio of the first time interval and the cycle time defines a duty cycle, and wherein the duty cycle is equal to or lower than 0.1.

7. The subscriber line interface circuit of claim 5, wherein the first time interval is smaller than 10 ms and the cycle time is smaller than 100 ms.

8. The subscriber line interface circuit of claim 1, wherein the switching power converter includes an inductor, a semiconductor switch and a capacitor coupled between the intermediate circuit node and a further circuit node providing a reference potential.

9. The subscriber line interface circuit of claim 8, wherein the single inductor, the semiconductor switch and the capacitor are arranged in accordance with an inverting buck-boost converter topology.

10. A method for supplying power to a first and a second subscriber terminal operably coupled to corresponding first and second subscriber loops; the method comprises:
a switching power converter repeatedly charging, via an intermediate circuit node, a first capacitor of a first output branch and a second capacitor of a second output branch to a high voltage level during a first time interval, and preventing discharging of the first and second capacitors to voltage levels lower than a given low voltage level when the first time interval has elapsed,
wherein the first and second capacitors provide power to the first and second subscriber terminals, respectively, via corresponding interface circuits coupled to the respective subscriber terminals by the respective subscriber loops,
wherein each output branch comprises a diode (D2, D3) that couples the intermediate circuit node (N3, N4) with an output circuit node of the output branch,
wherein each output branch comprises a resistor (R2, R3), the resistor and the output capacitor of each output branch forming an RC low-pass.

11. The method of claim 10, wherein charging the first and second capacitors is initiated cyclically in accordance with a cycle time.

12. The method of claim 10, wherein the first and second capacitors are each charged by a controllable voltage source via corresponding first and second resistors and first and second diodes, respectively.

## Patentansprüche

1. Schnittstellenschaltung einer Teilnehmerleitung, umfassend:
eine erste Schnittstellenschaltung (211), die funktionsfähig mit einem ersten Teilnehmeranschluss (L11) geschaltet ist;
eine zweite Schnittstellenschaltung (212), die funktionsfähig mit einem zweiten Teilnehmeranschluss (L12) geschaltet ist;
eine Stromversorgungsschaltung (220), die mit der ersten und der zweiten Schnittstellenschaltung geschaltet ist, so dass eine erste bzw. eine zweite Ausgangsspannung an die erste bzw. die zweite Schnittstellenschaltung bereitgestellt wird; wobei die Stromversorgungsschaltung Folgendes umfasst:
einen Schaltstromumrichter, der funktionsfähig mit einer Eingangsspannung versorgt wird und dazu konfiguriert ist, ein Zwischenspannungssignal an einem Zwischenschaltungsknoten (N2) bereitzustellen;
mindestens einen ersten und einen zweiten Ausgangszweig, wobei jeder Ausgangszweig einen Ausgangskondensator (C2, C3) umfasst, der mit dem Zwischenschaltungsknoten geschaltet ist und ein Ausgangsspannungssignal, das vom Zwischenspannungssignal abhängig ist, bereitstellt,
wobei der erste Ausgangszweig dazu konfiguriert ist, das Ausgangsspannungssignal an die erste Schnittstellenschaltung bereitzustellen,
wobei der zweite Ausgangszweig dazu konfiguriert ist, das Ausgangsspannungssignal an die zweite Schnittstellenschaltung bereitzustellen,
wobei der Schaltstromumrichter dazu konfiguriert ist, den Signalpegel des Zwischenspannungssignals wiederholt zu einem hohen Spannungspegel für einen ersten Zeitraum und zu einem niedrigen Spannungspegel, wenn der erste Zeitraum verstrichen ist, einzustellen,
wobei jeder Ausgangszweig eine Diode (D2, D3) umfasst, die den Zwischenschaltungsknoten (N3, N4) mit einem Ausgangsschaltungsknoten des Ausgangszweigs schaltet,
wobei jeder Ausgangszweig einen Widerstand (R2, R3) umfasst, wobei der Widerstand und der Ausgangskondensator jedes Ausgangszweigs einen RC-Tiefpass bilden.

2. Schnittstellenschaltung einer Teilnehmerleitung nach Anspruch 1, wobei jeder Ausgangszweig eine Induktivität umfasst, wobei die Induktivität und der Ausgangskondensator jedes Ausgangszweigs einen LC-Tiefpass bilden.

3. Schnittstellenschaltung einer Teilnehmerleitung nach Anspruch 1, wobei jeder Ausgangszweig eine Diode und eine Induktivität umfasst, die in Reihe geschaltet sind, wobei die Induktivität und der Ausgangskondensator jedes Ausgangszweigs einen LC-Tiefpass bilden und die Diode den Zwischenschaltungsknoten und den LC-Tiefpass verbindet.

4. Schnittstellenschaltung einer Teilnehmerleitung nach Anspruch 3, wobei die Diode in jedem Ausgangszweig derart angeordnet ist, dass ein Entladen des Ausgangskondensators über den Zwischenschaltungsknoten durch die Diode verhindert wird.

5. Schnittstellenschaltung einer Teilnehmerleitung nach Anspruch 1, wobei der Schaltstromumrichter dazu konfiguriert ist, den Signalpegel des Zwischenspannungssignals zyklisch und mit einer Zykluszeit zu einem hohen Spannungspegel für einen ersten Zeitraum und zu einem niedrigen Spannungspegel, wenn der erste Zeitraum verstrichen ist, einzustellen.

6. Schnittstellenschaltung einer Teilnehmerleitung nach Anspruch 5, wobei das Verhältnis des ersten Zeitraums und der Zykluszeit ein Tastverhältnis bestimmt und wobei das Tastverhältnis gleich oder kleiner als 0,1 ist.

7. Schnittstellenschaltung einer Teilnehmerleitung nach Anspruch 5, wobei der erste Zeitraum kleiner als 10 ms ist und die Zykluszeit kleiner als 100 ms ist.

8. Schnittstellenschaltung einer Teilnehmerleitung nach Anspruch 1, wobei der Schaltstromumrichter eine Induktivität, einen Halbleiterschalter und einen Kondensator beinhaltet, die zwischen dem Zwischenschaltungsknoten und einem weiteren Schaltungsknoten, der ein Bezugspotential bereitstellt, geschaltet sind.

9. Schnittstellenschaltung einer Teilnehmerleitung nach Anspruch 8, wobei die einzelne Induktivität, der Halbleiterschalter und der Kondensator gemäß einer invertierenden Abwärts-Aufwärts-Wandler-Topologie angeordnet sind.

10. Verfahren zum Liefern von Strom zu einem ersten und einem zweiten Teilnehmerendgerät, die funktionsfähig mit einem entsprechenden ersten und zweiten Teilnehmeranschluss geschaltet sind; wobei das Verfahren Folgendes umfasst:
einen Schaltstromumrichter, der einen ersten Kondensator eines ersten Ausgangszweigs und einen zweiten Kondensator eines zweiten Ausgangszweigs wiederholt über einen Zwischenschaltungsknoten zu einem hohen Spannungspegel während eines ersten Zeitraums auflädt und ein Entladen des ersten und des zweiten Kondensators zu Spannungspegeln, die niedriger als ein gegebener niedriger Spannungspegel sind, verhindert, wenn der erste Zeitraum verstrichen ist,
wobei der erste und der zweite Kondensator Strom über entsprechende Schnittstellenschaltungen, die durch die jeweiligen Teilnehmeranschlüsse mit den entsprechenden Teilnehmerendgeräten geschaltet sind, an das erste bzw. das zweite Teilnehmerendgerät bereitstellen,
wobei jeder Ausgangszweig eine Diode (D2, D3) umfasst, die den Zwischenschaltungsknoten (N3, N4) mit einem Ausgangsschaltungsknoten des Ausgangszweigs schaltet,
wobei jeder Ausgangszweig einen Widerstand (R2, R3) umfasst, wobei der Widerstand und der Ausgangskondensator jedes Ausgangszweigs einen RC-Tiefpass bilden.

11. Verfahren nach Anspruch 10, wobei das Aufladen des ersten und des zweiten Kondensators zyklisch gemäß einer Zykluszeit initiiert wird.

12. Verfahren nach Anspruch 10, wobei der erste und der zweite Kondensator jeweils durch eine steuerbare Spannungsquelle über einen entsprechenden ersten und zweiten Widerstand bzw. eine erste und zweite Diode aufgeladen werden.

## Revendications

1. Circuit d'interface de ligne d'abonné, comprenant :
un premier circuit d'interface (211) couplé de manière fonctionnelle à une première boucle d'abonné (L11) ;
un second circuit d'interface (212) couplé de manière fonctionnelle à une seconde boucle d'abonné (L12) ;
un circuit d'alimentation (220) couplé au premier et au second circuit d'interface pour fournir respectivement une première et une seconde tension de sortie au premier et au second circuit d'interface ; le circuit d'alimentation comprenant :
un convertisseur de puissance à commutation alimenté de manière fonctionnelle par une tension d'entrée, et conçu pour fournir un signal de tension intermédiaire à un noeud de circuit intermédiaire (N2) ;
au moins une première et une seconde branche de sortie, chaque branche de sortie comprenant un condensateur de sortie (C2, C3) couplé au noeud de circuit intermédiaire et fournissant un signal de tension de sortie dépendant du signal de tension intermédiaire,
la première branche de sortie étant conçue pour fournir le signal de tension de sortie au premier circuit d'interface,
la seconde branche de sortie étant conçue pour fournir le signal de tension de sortie au second circuit d'interface,
le convertisseur de puissance à commutation étant conçu pour régler le niveau de signal du signal de tension intermédiaire de manière répétée à un niveau de tension haut pendant un premier intervalle de temps, et à un niveau de tension bas quand le premier intervalle de temps s'est écoulé,
chaque branche de sortie comprenant une diode (D2, D3) couplant le noeud de circuit intermédiaire (N3, N4) à un noeud de circuit de sortie de la branche de sortie,
chaque branche de sortie comprenant une résistance (R2, R3), la résistance et le condensateur de sortie de chaque branche de sortie formant un passe-bas RC.

2. Circuit d'interface de ligne d'abonné selon la revendication 1, dans lequel chaque branche de sortie comprend une bobine d'induction, la bobine d'induction et le condensateur de sortie de chaque branche de sortie formant un passe-bas LC.

3. Circuit d'interface de ligne d'abonné selon la revendication 1, dans lequel chaque branche de sortie comprend une diode et une bobine d'induction, couplées en série, la bobine d'induction et le condensateur de sortie de chaque branche de sortie formant un passe-bas LC, et la diode connectant le noeud de circuit intermédiaire et le passe-bas LC.

4. Circuit d'interface de ligne d'abonné selon la revendication 3, dans lequel, dans chaque branche de sortie, la diode est disposée de sorte que la décharge du condensateur de sortie par le biais du noeud de circuit intermédiaire soit empêchée par la diode.

5. Circuit d'interface de ligne d'abonné selon la revendication 1, dans lequel le convertisseur de puissance à commutation est conçu pour régler le niveau de signal du signal de tension intermédiaire de manière cyclique et avec une durée de cycle à un niveau de tension haut pendant un premier intervalle de temps, et à un niveau de tension bas quand le premier intervalle de temps s'est écoulé.

6. Circuit d'interface de ligne d'abonné selon la revendication 5, dans lequel le rapport entre le premier intervalle de temps et la durée de cycle définit un cycle de service, le cycle de service étant inférieur ou égal 0,1.

7. Circuit d'interface de ligne d'abonné selon la revendication 5, dans lequel le premier intervalle de temps est inférieur à 10 ms et la durée de cycle est inférieure à 100 ms.

8. Circuit d'interface de ligne d'abonné selon la revendication 1, dans lequel le convertisseur de puissance à commutation comprend une bobine d'induction, un commutateur à semiconducteur et un condensateur couplés entre le noeud de circuit intermédiaire et un autre noeud de circuit fournissant un potentiel de référence.

9. Circuit d'interface de ligne d'abonné selon la revendication 8, dans lequel l'unique bobine d'induction, le commutateur à semiconducteur et le condensateur sont disposés selon une topologie de convertisseur abaisseur-survolteur d'inversion.

10. Procédé d'alimentation d'un premier et d'un second terminal d'abonné couplé de manière fonctionnelle à une première et à une seconde boucle d'abonné correspondantes, le procédé consistant à :
charger de manière répétée, par un convertisseur de puissance à commutation, par le biais d'un noeud de circuit intermédiaire, un premier condensateur d'une première branche de sortie et un second condensateur d'une seconde branche de sortie à un niveau de tension haut pendant un premier intervalle de temps ; et
empêcher la décharge du premier et du second condensateur à des niveaux de tension inférieurs à un niveau de tension bas donné quand le premier intervalle de temps s'est écoulé,
le premier et le second condensateur fournissant respectivement du courant au premier et au second terminal d'abonné, par le biais de circuits d'interface correspondants couplés aux terminaux d'abonné respectifs par les boucles d'abonné respectives,
chaque branche de sortie comprenant une diode (D2, D3) couplant le noeud de circuit intermédiaire (N3, N4) à un noeud de circuit de sortie de la branche de sortie,
chaque branche de sortie comprenant une résistance (R2, R3), la résistance et le condensateur de sortie de chaque branche de sortie formant un passe-bas RC.

11. Procédé selon la revendication 10, dans lequel la charge du premier et du second condensateur est amorcée de manière cyclique selon une durée de cycle.

12. Procédé selon la revendication 10, dans lequel le premier et le second condensateur sont chargés chacun par une source de tension régulable par le biais, respectivement, d'une première et d'une seconde résistance et d'une première et d'une seconde diode correspondantes.
